# EUROPEAN PATENT APPLICATION

(11) **EP 2 045 229 A1**
(43) Date of publication of application: **08.04.2009**
(21) Application number: 07768157.5
(22) Date of filing: 28.06.2007
(51) Int. Cl.: C04B 41/63, B28B 11/04, B28B 11/24, C04B 40/02, C08K 3/34, C08L 101/00, E04G 21/02

(54) **CEMENT COMPOSITE AND METHOD OF FORMING THE SAME**

(30) Priority: 26.07.2006 JP 2006202801
(71) Applicant: Denki Kagaku Kogyo Kabushiki Kaisha, Tokyo 103-8338 (JP)
(72) Inventor: YAMAGISHI, Takanori, Itoigawa-shi Niigata 949-0393 (JP); TAKAGI, Satoshi, Itoigawa-shi Niigata 949-0393 (JP); USUI, Eiichi, Itoigawa-shi Niigata 949-0393 (JP); ARAKI, Akitoshi, Itoigawa-shi Niigata 949-0393 (JP); MORIOKA, Minoru, Itoigawa-shi Niigata 949-0393 (JP); ANDO, Toshihiro, Machida-shi Tokyo 194-8560 (JP)
(74) Representative: Vossius & Partner
(86) International application number: PCT/JP2007/063406
(87) International publication number: WO 2008/013033

(57) **Abstract**

The invention provides a cement composite and its formation method, in which a specific substance block agent is coated on a hardened cement product, thereby effectively blocking off substances responsible for corrosion and cracking, holding back carbonation of the hardened cement product and making the hardened cement product less likely to turn white.

In the cement composite, a hardened cement product is coated with a substance block agent composed chiefly of an aqueous dispersion of synthetic resin, a swelling clay mineral and a pigment. The swelling clay mineral is a swelling clay mineral containing fluorine; the substance block agent contains a water-soluble resin; and the substance block agent is coated on the hardened cement product in an amount of 50 to 500 g/m². The invention also provides a cement composite formation method, **characterized in that** the substance block agent is coated on the surface of the hardened cement product.

## Description

### ART FIELD

The present invention relates to a hardened cement product used chiefly in the civil engineering and construction fields.

### BACKGROUND ART

As concrete or mortar is exposed to the air, substances leading to corrosion such as chloride ions, water, carbon dioxide gas and acidic substances penetrate inside, causing cracking or loose part of concrete or mortar, and as deterioration makes further progresses, it causes concrete to scale off. Further, with concrete or mortar exposed to the air, it is subjected to drying; so moisture is gradually evaporated from within, often resulting in cracking. For concrete detracting from deterioration due to the substances responsible for corrosion, there have been various proposals made such as surface coating methods, patching repair methods and electrochemical repair methods, depending on the degree of deterioration. When deterioration is invisible, the impregnating agent coating or surface coating method is often used; in general, however, use is made of methods using the coating of impregnating agents based on silicates and silicone or resinous surface coating materials such as acrylic resins or epoxy resins, or polymer cement mortar for thin coating. The impregnating agents are found to be insufficient in terms of the effect on the ability to block off substances responsible for correction, and although the resinous surface coating materials excel in the ability to block off the substances, yet they take much time because of relying on multiple coatings. Besides, the latter cost much; they are not economical in terms of both material cost and work cost. The polymer cement mortar for thin coating costs less, but unless it is coated at certain thicknesses, any sufficient substance blocking effect is not obtained, often resulting in cracking.

For prevention of cracking due to moisture evaporation, sheet covering, water spraying, and curing agent spraying is carried out in addition to the techniques of holding back shrinkage by use of expansive concrete. For instance, the time of locating and keeping a form is adjusted while surface concrete remains wet (see Non-Patent Publication 1).

When the surface area of a floor or placing of concrete over which concrete is poured is large, however, there is a problem in that much labor and cost are taken for curing. When the curing agent is sprayed, too, there is another problem in that no sufficient effect on prevention of evaporation is obtained.

Normal temperature curing, steam curing, and autoclave curing is applied to secondary concrete products, and steam curing, and autoclave curing takes form removal in an early state.

Especially for the secondary product of a hardened cement product containing an expansive admixture, water curing, and sprinkle curing is desired after removal of the form.

However, when a large or much member is cured in water, there are problems: the installation involved gets bulky or much labor and cost are needed for maintaining and managing it.

Sprinkle curing renders it difficult to sprinkle water evenly inside and outside the member: there is a problem in that much water is used up, and it freezes in winter.

On the other hand, a problem with steam curing is that the amount of expansion decreases due to the scattering of water in concrete, because during removal of the form, the temperature of concrete often grows higher than the indoor temperature.
Non-Patent Publication 1
"Section 8 - Curing", Standard Specifications for construction work and Explanations, JASS 5 Reinforced Concrete Work, pp. 25-26

On the other hand, a cement admixture such as a shrinkage reducing agent or expansive admixture has so far been used for reducing the shrinkage by drying of hardened cement products.

Shrinkage reducing agents or expansive admixtures are used as the material to reduce the shrinkage by drying of the hardened cement products in the fields of wall or floor slabs for general buildings, the materials for widening roads, and various repair materials as well as for cement products used for making up for prevention of shrinkage by drying, curing, etc.

For instance, it has been known that the shrinkage reducing agents or expansive admixtures are used in an amount of about 20 to 30 kg per 1 m³ of concrete for general buildings such as walls, roof slabs, and floor materials, hydraulic structures such as water tanks and pools, and general structures or secondary products such as paving, floor sheets and boxculverts for the purpose of prevention of shrinkage by drying and making up for shrinkage by curing (see Non-Patent Publication 2).

However, the strength of expansive admixture or shrinkage reducing agent-containing hardened cement product on site does not reach the desired design strength, often resulting in an obstacle to the hydration of cement by scattering of moisture and an increased shrinkage by drying. As a result, there is a drop of resistance to the given cracking.
Non-Patent Publication 2
"Expansive Admixtures and Shrinkage Reducing Agents", Concrete Engineering, Vo. 24, No. 2, Feb. 1986, pp. 56-62

Besides, coating curing agents have been used for the purpose of prevention of cracking of mortar or concrete, and organic coating curing agents (Patent Publication 1) and organic-inorganic composite type coating curing agents have been developed (Patent Publications 2 and 3).

However, although the conventional organic coating curing agents have been found to have some effects on holding back cracking, but much is still desired. In addition, they are found to fail to hold back carbonation and resistance to entrance of chloride ions.

On the other hand, the organic-inorganic composite type coating curing agents have been found to be superior in the effect on holding back cracking to the conventional organic coating curing agents, and have an enhanced effect on holding back carbonation and increasing resistance to entrance of chloride ions. However, such coating curing agents are likely to turn white upon wetted with water, and have the dark side of experiencing difficulty in application to fields where aesthetic considerations are important such as secondary lining concrete of tunnels, concrete secondary products such as segments, and slab concrete at parking lots. For the effect on holding back carbonation and increasing resistance to entrance of chloride ions, too, much more improvements in performance are still desired.
Patent Publication 1: JP(A) 2004-244255
Patent Publication 2: JP(A) 2002-274976
Patent Publication 3: JP(A) 2005-162534

### DISCLOSURE OF THE INVENTION

### PROBLEMS TO BE SOLVED BY THE INVENTION

Providing a solution to the aforesaid problems, the invention has for the object the provision of a cement composite wherein a specific substance block agent is coated on a hardened cement product thereby augmenting effects on blocking off substances responsible for corrosion and cracking and holding back carbonation so that the cement composite is less likely to turn white, and a method for forming it.

### MEANS FOR SOLVING THE PROBLEM

(1) A cement composite, wherein a hardened cement product is coated with a substance block agent composed chiefly of an aqueous dispersion of synthetic resin, a swelling clay mineral and a pigment.
(2) A cement composite according to (1) above, **characterized in that** said swelling clay mineral is a swelling clay mineral containing fluorine.
(3) A cement composite according to (1) or (2) above, **characterized in that** said substance block agent contains a water-soluble resin.
(4) A cement composite according to any one of (1) to (3) above, **characterized in that** said substance block agent is coated on the hardened cement product in an amount of 50 to 500 g/m².
(5) A method of forming the cement composite according to any one of (1) to (4) above, **characterized in that** said substance block agent is coated on the surface of the hardened cement product.

The "hardened cement product" used here is understood to refer generally to a cured mass of cement paste, mortar, and concrete.

Unless otherwise specified, parts, and percentages will be given on a mass basis.

### ADVANTAGES OF THE INVENTION

The cement composite coated with the substance block agent of the invention is superior in the ability to block off substances so that concrete or mortar can be protected from various corrosive factors such as chloride ions, carbon dioxide gas, water, and acidic substances. The inventive cement composite also holds back the evaporation of moisture from within concrete or mortar so that it is possible to reduce or eliminate cracking due to shrinkage. Further, the cement composite coated with the inventive pigment-containing substance block agent is much more improved in prevention of carbonation than a cement composite coated with a conventional organic-inorganic type coating curing agent so that upon wetted with water, whitening can be prevented.

Therefore, the inventive cement composite may be applied for preventive maintenance to newly established concrete structures or structures close to them thereby extending their service life. For maintenance after deterioration, the inventive cement composite may also be coated on a slightly deteriorating structure or used in combination with various repair methods such as a patching repair method or an electrochemical repair method thereby increasing the service life of the structures.

### BEST MODE FOR CARRYING OUT THE INVENTION

The present invention is now explained in further details.

The aqueous dispersion of synthetic resin used herein refers generally to a synthetic resin emulsion that is obtained by the emulsion polymerization of one or more selected from an aromatic vinyl monomer, an aliphatic conjugated diene monomer, an ethylenical unsaturated fatty acid monomer, and other copolymerizable monomers. For instance, there is the mention of a styrene·butadiene latex composed chiefly of styrene, a styrene·acrylic emulsion, a methyl methacrylate·butadiene latex copolymerized with styrene, and an ethylene·acrylic emulsion. More desirously, the synthetic resin emulsion should further contain a carboxyl or hydroxy group.

The emulsion polymerization here is an ordinary emulsion polymerization process wherein the monomers to be polymerized together are mixed, and the mixture is polymerized in an aqueous system with the addition of an emulsifying agent and a polymerization initiator to it.

To obtain the stability of a blend with the fluorine-containing swelling clay mineral, a basic substance such as ammonia, ammines, and caustic soda may be used to adjust the pH of the blend to 5 or higher.

The aqueous dispersion of synthetic resin has a particle diameter of generally 100 to 300 nm, and more preferably about 60 to 100 nm.

For the water-soluble resin, there is the mention of processed starch or its derivatives, cellulose derivatives, oxides of polyvinyl acetate or their derivatives, polymers containing a sulfonic acid group or their salts, polymers or copolymers of acrylic acid or their salts, polymers or copolymers of acrylamide, polyethylene glycol, oxazoline group-containing polymers, and so on, of which one or two or more may be used.

The water-soluble resin should preferably have a solubility of 1% or more in purified water at normal temperature, with a hydrogen-bonding or ionic group being 10 to 60% per unit weight of resin.

The water-soluble resin should preferably also have an average molecular weight of 2,000 to 1,000,000.

Although not specifically limited, the amount of the water-soluble resin used should preferably be between 0.05 part and 200 parts on a solid basis per 100 parts on a solid basis of the aqueous dispersion of synthetic resin. At less than 0.05 part, the stability of the emulsion might often go worse, and at greater than 200 parts, the durability of the emulsion might often go worse.

The swelling clay mineral has an important role in the substance block effect. The swelling clay mineral exits in the aqueous dispersion of synthetic resin; so upon film formation, the clay mineral forms a multilayer structure in the film. Accordingly, when a substance moves from inside or outside the hardened cement product, the clay mineral yields a block wall with the length of the path taken by that substance growing long, making the ability to block off that substance better than could be achieved with a film formed of the emulsion alone.

For the swelling clay mineral, there is the mention of a layer silicate mineral belonging to the smectite group, for instance, montmorillonite, beidellite, nontronite, saponite, and bentonite, which may be used in natural, synthetic, and processed forms. Micas may be used, too, preferably in swelling forms. Available micas are of the disilicic, trisilicic, and tetrasilicic types, of which preference is given to the tetrasilicic type mica, because of its swelling capability. For instance, there is the mention of Na tetrasilicic mica NaMg₂₅(Si₄O₁₀)F₂, Na or Li teniolite (NaLi)Mg₂Li(Si₄O₁₀)F₂, and Na or Li hectolite (NaLi)_{1/3}Mg_{2/3}Li_{1/3}(Si₄O₁₀)F₂, and the use of micas containing fluorine is preferable. Such swelling clay minerals may be used in combination of two or more.

The swelling clay mineral has an aspect ratio of preferably 50 to 5,000. The aspect ratio here is the ratio between the length and the thickness of a clay mineral dispersed in a layer form, as measured on an electron microphotograph.

The amount of the swelling clay mineral used is preferably 1 to 50 parts per 100 parts on a solid basis of the aqueous dispersion of synthetic resin. At less than 1 part, the ability to block off substances might not often be obtained, and at greater than 50 parts, film-formation capability might often go worse.

In the invention, the pigment is used for the purpose of adjusting coloring when the hardened cement product is coated with the substance block agent. The substance block agent free of any pigment forms an almost transparent film when coated and dried on the hardened cement product; however, that film may often be more wetted with water and blackened than the coloring of the hardened cement product before coating or, alternatively, whitened. The possible reasons could be dependent on the surface state of concrete, humidity in the air, weather, etc. By the addition of the pigment, it is possible to increasingly hold back carbonation and the penetration of chloride ions, and prevent whitening of the hardened cement product when wetted with water.

The pigment used here is broken down into an inorganic one and an organic one in view of its components. The inorganic pigment includes a pigment chemically synthesized with a natural mineral pigment. So far, the organic pigment has been composed chiefly of a dye that results from plant, for instance, aquamarine and solidified in various ways; however, pigments now used in the industry are all petrochemically synthesized pigments. The pigments are also regulated according to JIS.

The inorganic pigment is broadly broken down into a natural mineral one and a synthetic inorganic one. The inorganic pigment is produced in much larger amounts than the organic one; so specific, mass-produced 12 items in particular are regulated for the Japan Industrial Standards (JIS). Note here that ceramic pigments used for the coloration of porcelain are included in the inorganic pigment, too. The organic pigment is classified into an insoluble one where the chemical structure itself is insoluble and a lake one where an originally water-soluble synthetic dye is made insoluble.

The naturally occurring pigment has been chiefly made up of a pulverized form of natural rocks and minerals except a black one for which soot resulting from the burning of fats and oils is used. Now called carbon black, the black soot is used for a multiplicity of versatile purposes. For red pigment, red oxide (iron oxide) and cinnabar (mercury sulfide) were used. Many red pigments now used in the industry are made of brown raw materials resulting from naturally occurring soil such as umber and sienna, calcium carbonate (white or colorless), and kaolin (clay: colorless). Of these natural pigments, the colorless ones are used for making light colors, and as a lake pigment material. In special examples, there is a pearl pigment (producing pearl-like gloss) for which white mica is used in a pulverized form.

Referring on the other hand to the chemically synthesized inorganic pigments, zinc white (zinc oxide), and titanium white (titanium oxide) is used as the white pigment, and other typical inorganic pigments include synthetic red oxide (red), cadmium yellow, strontium chromate (yellow), viridian, oxide of chromium (green), synthetic ultramarine (blue), and so on. In general, the inorganic pigment is poorer in coloring power, transparency and clearness than the organic pigment; however, it is often used for paints because of its good weather resistance. Aluminum powders used for silver or gold paints and inks, too, are included in the inorganic pigment.

What is generally called the organic pigment includes the ones composed chiefly of organic compounds. The organic pigment is broadly broken down into an azo one and a polycyclic one in view of its chemical structure; in view of color hue, however, it may be classified into an insoluble dye and a lake pigment.

The insoluble dye chiefly includes a polycyclic one and an azo one. A typical polycyclic dye is a phthalocyanine pigment, and phthalocyaninc blue is a copper-containing organic compound that takes on clear blue and has good weather resistance as well. Green phthalocyanine green is a compound of the same system, too.

The azo pigment is synthesized in water through the reaction of an aromatic amine with a coupling component. The azo pigment takes on a hue from yellow to orange to red to reddish purple with its coloring power generally stronger than that of the inorganic pigment. The lake pigment is originally the one obtained by the solidification of a water-soluble dye, and most have a high concentration and a clear hue like red Lake Red C and Watchung Red. These pigments are used for printing inks. Naturally occurring pigments obtained by making the ever used dyes resulting from animals and plants, too, are included in the lake pigment.

In the invention, the aforesaid pigments may be used singly or in combination of two or more; however, it is preferable to selectively use the inorganic pigment in view of the effects on blocking off substances, etc. Among others, preference is given to a mixture of triiron tetraoxide and titanium dioxide.

Not exclusively, the pigment is usually used in an amount of preferably 0.1 to 30 parts, more preferably 1 to 10 parts per 100 parts of the substance block agent comprising an aqueous dispersion of synthetic resin, a water-soluble resin, a swelling clay mineral and a pigment. At less than 0.1 part, it might be impossible to produce colors stably or it might be impossible to make improvements in the effect on blocking off harmful substances. At greater than 30 parts, the increased effect might go tenuous with a decreasing applicability.

In the invention, a crosslinking agent may also be used. The crosslinking agent here refers to an agent that reacts with a hydrophilic functional group that the water-soluble resin or the aqueous dispersion of synthetic resin has, for instance, a carboxyl group, an amide group, and a hydroxyl group, to get crosslinked, polymerized (into a three-dimensional network structure) or hydrophobic. The cross-linking agent should preferably have an oxazoline group that undergoes an addition reaction with the carboxyl group, because it also serves as the water-soluble resin.

The amount of the crosslinking agent used is preferably 0.01 to 30 parts on a solid basis per 100 parts on a solid basis of the total of the aqueous dispersion of synthetic resin and the water-soluble resin. At less than 0.01 part, polymerization might not take place due to low crosslinking capabilities whereas, at greater than 30 parts, the effect of the crosslinking agent levels off.

Preferably, the substance block agent of the invention is synthesized by a process wherein the water-soluble resin, the swelling clay mineral and the pigment are mixed together in water beforehand, and the aqueous dispersion of synthetic resin and the crosslinking agent are then mixed with the resulting mixture. Note here that the pigment may be mixed with the mixture obtained by mixing together the water-soluble resin and the swelling clay mineral in water beforehand, and then mixing together the aqueous dispersion of synthetic resin and the cross-linking agent.

The substance block agent of the invention may be coated on the hardened cement product by any desired process that allows a substance block film to be evenly formed. By way of illustration but not by way of limitation, coating may be carried out by spray coating, brush coating or roller coating.

Basically, the substance block agent of the invention is covered over a cured mass; for instance, however, when a new hardened cement product is prepared, coating may just as well be carried out at the time the setting of the cement proceeds until its fluidity is lost (for instance, at the time of troweling or at the time when the cement has a hardness in the vicinity of the setting start time).

The amount of the inventive substance block agent coated is preferably 50 to 500 g/m², and more preferably 100 to 400 g/m². At less than 50 g/m², the effect on blocking off substances might not be expectable whereas, at greater than 500 g/m², the block effect would level off relative to the cost and labor involved.

By way of example but not by way of limitation, the hardened cement products to be coated with the inventive substance block agent include ordinarily used cement paste, mortar, and concrete. Mortar contains cement and a fine aggregate, if necessary, with the addition of an admixture agent or material to them, and concrete further contains a coarse aggregate.

Although the substance block agent of the invention is applied mainly to members built up using cement, yet it may just as well be applicable to moldings molded of stone, brick, wood, tile, plaster of paris, gypsum or the like other than hardened cement.

The cement used here includes various Portland cements such as normal, high-early strength, super-early-strength, low heat, and moderate heat Portland cements; various blended cements wherein such Portland cements are mixed with Portland blast-furnace cement, fly ash or silica; filler cements wherein such Portland cements are mixed with limestone powders or blast-furnace cooled slag fine powders; and environment-friendly or eco-cements produced using various industrial wastes as a main material, which may be used alone or in combination of two or more.

There is no exclusive limitation on the aggregate used here; for instance, there is the specific mention of naturally occurring aggregates based on silica sand, and limestone; man-made aggregates based on quenched blast furnace slag, cooled blast furnace slag, and regenerated aggregate; and heavy weight aggregates having a specific weight of greater than 3.0 g/cm³. Specific man-made aggregates include electric furnace oxidization-stage slag aggregate, and non-ferrous smelting slag aggregate in which ferronickel slag, ferrochromium slag, copper slag, zinc slag, and lead slag are all included, and specific natural aggregates include olivine-base ones, the so-called olivine sand, emery ores and so on. In the invention, such aggregates may be used alone or in combination of two or more.

There is no exclusive limitation on the amount of water used at the time mortar or concrete is produced, because it varies with the blend proportions of various materials depending on what purpose they are used for; however, the ratio of water to cement involved is in the range of usually 25 to 60%, and more preferably 30 to 55%. When the water-to-cement ratio is less than 25%, it might be difficult to obtain fluidity, and the amount of heat generated might grow very large. Conversely, at greater than 60%, it might be difficult to let the cement produce strength. In addition, there is undisturbed mass transportation that is likely to render it difficult to make sure durability.

In the invention, the cement and aggregate contain admixture materials such as fine powders of limestone, fine powders of blast furnace cooled slag, sewage sludge incineration ash or its molten slag, municipal waste incineration ash or its molten slag and pulp sludge incineration ash, water-reducing agents, AE water-reducing agents, high-performance water-reducing agents, high-performance AE water-reducing agents, setting regulators, defoamers, thickeners, rust preventives, antifreezing agents, shrinkage preventives, fiber materials such as steel fibers, vinylon fibers, carbon fibers and wollstonite fibers, polymers, clay minerals such as bentonite, and anion exchangers such as hydrotalcite, which may be used alone or in combination of two or more in a range that is substantially not detrimental to the objects of the invention.

The method for the protection of the hardened cement product by the inventive substance block agent ensures ever higher resistance as compared with the hardened cement product that is not covered for every corrosive factor. Specifically, preventive maintenance can be applied to the surfaces of concrete structures for the purpose of providing protection against the penetration of chloride ions, carbon dioxide gas, water, and acidic substances. The inventive method is also usable even for the purpose of delaying the progress of corrosion when the degree of deterioration is slight. Further, the inventive method may be used in combination with the construction where defective sites are removed and sections are repaired with polymer cement mortar, electrochemical repair construction: the combination with various repair methods makes sure higher-quality repair.

It is also possible to hold back transportation of mass from within the hardened cement product in general, and to minimize the evaporation of moisture that causes cracking by drying. In other words, the inventive substance block agent may be used as a curing agent when mortar or concrete is worked, and for the purpose of protecting concrete or mortar against cracking as well.

### Example 1

Fifty parts of water and 200 parts of fine aggregate were blended with 100 parts of cement to prepare a mortar sample. This mortar sample was poured over an earthen floor having an area of 10 m² at a thickness of 100 mm. Wet curing was carried out until a material age of three days. After set, various pigments shown in Table 1 were blended in an amount of 3 parts with 97 parts of the substance block agent, and that substance block agent was coated on the mortar surface in an amount of 200 g per 1 m². After a material age of 91 days, to what degree cracking occurred was observed.

The same amount of the same substance block agent was coated at the same time on a test piece of 40×40×160 mm prepared from the same mortar sample to estimate resistance to carbonation, and resistance to the penetration of chloride ions by dipping in pseudo-seawater.

For the purpose of comparison, similar estimations were made with an organic-inorganic composite type coating curing agent free of any pigment, and a conventional coating curing agent, and with an admixture of the substance block agent with mortar. The results are set out in Table 1.

### Used Materials

Cement: Commercial normal Portland cement
Fine Aggregate: Produced in Himekawa, Niigata Prefecture, with a specific weight of 2.62
Pigment (a): Commercial white inorganic pigment based on titanium dioxide
Pigment (b): Commercial black inorganic pigment based on carbon black
Pigment (c): Commercial gray inorganic pigment based on a mixture of triiron tetraoxide and titanium dioxide
Pigment (d): Commercial brown inorganic pigment based on diiron trioxide
Pigment (e): Commercial yellow inorganic pigment based on chromium oxide
Pigment (f): Commercial red organic pigment based on azo Organic-inorganic composite type coating curing agent: Agent available under the trade name of "CA212"; Aqueous dispersion of synthetic resin (ethylene acrylic acid copolymer emulsion having a molecular weight of 27,500, an acrylic acid/ethylene copolymerization ratio of 15/85 and a solid content of 30%) - Swelling clay mineral (Na tetrasic mica having a composition formula represented by a composite type NaMg_{2.5}(Si₄O₁₀)F₂) (free of any pigment) Substance block agent: Mixtures of the aforesaid organic-inorganic composite type coating curing agent with pigments (a) to (f)
Conventional coating curing agent: Commercial EVA type coating curing agent
Water: Tap water

### Measuring Methods

### (A) Cracking resistance testing

X indicates that two or more cracks occurred per 1 m₂; Δ indicates that one or two cracks occurred; and ○ indicates that there was no crack found.

### (B) Carbonation testing (depth of carbonation)

The sample was cured in water of 20°C until a material age of 14 days, and cured for 4 weeks in an environment having a temperature of 30°C, a relative humidity of 60% and a CO₂ concentration of 5%. The cured sample was cut out and a 1% alcohol solution of phenol-phthalein was sprayed onto a section to measure the depth of carbonation: a portion of the section that did not turn red was taken as a carbonated portion.

### (C) Resistance-to-penetration of chloride ions testing (depth of penetration of chloride ions)

Curing was carried out in water of 20°C until a material age of 14 days, and a sample was dipped in pseudo-seawater for 4 weeks. The cured product was cut to measure the depth of penetration of chloride ions by the silver nitrate.

### (D) Change-of-color testing

The coating curing agent was coated on a pavement sheet of 30 cm×30 cm at a proportion of 200 g/m². After the lapse of 1 day from coating, the pavement sheet was dipped in water of 20°C, and lifted up from the water after the elapse of 3 days from the dipping to observe whether or not whitening occurred. X indicates that whitening occurred at more than 1/5 of the area; Δ indicates that whitening occurred at less than 1/5 to more than 1/10 of the area; and ○ indicates that whitening occurred at less than 1/10 of the area.

**Table 1**

| Experiment No. | Pigment | Organic-inorganic composite type coating curing agent | (A) | (B) (mm) | (C) (mm) | (D) |
|---|---|---|---|---|---|---|
| 1-1 | (a) | Used | ○ | 1.6 | 7.2 | ○ |
| 1-2 | (b) | Used | ○ | 1.4 | 7.0 | ○ |
| 1-3 | (c) | Used | ○ | 1.1 | 6.6 | ○ |
| 1-4 | (d) | Used | ○ | 1.3 | 6.9 | ○ |
| 1-5 | (e) | Used | ○ | 1.5 | 6.8 | ○ |
| 1-6 | (f) | Used | ○ | 1.9 | 8.5 | ○ |
| 1-7 | Not used | Used | ○ | 3.5 | 9.7 | X |
| 1-8 | (c) | Used plus admixture | X | 5.7 | 16.2 | ○ |
| 1-9 | Conventional coating curing agent | | X | 5.5 | 15.9 | Δ |
| 1-10 | No coating curing agent | | X | 5.7 | 16.3 | ○ |

| | | | | | | |
|---|---|---|---|---|---|---|
| Experiment Nos. 1-1 to 1-6 are for the invention, and Experiment Nos. 1-7 to 1-10 are for the prior art. In Experiment No. 1-7 the pigment-free organic-inorganic composite type coating curing agent was used; in Experiment No. 1-8 the substance block agent containing the pigment (c) was admixed with mortar; and in Experiment No. 1-9 the EVA type coating curing agent was used. | | | | | | |

From Table 1, it is found that the inventive treatment method prevents mortar from cracking, works much more for prevention of carbonation or penetration of chloride ions, and makes mortar less likely to turn white even wetted with water.

### Example 2

Experimentation was carried out following Example 1 with the exception that the amount per 1 m² of the substance block agent (a mixture of pigment (c) with the organic-inorganic composite type coating curing agent) used in Experiment No. 1-3 in Example 1 was changed as shown in Table 2. The results are set out in Table 2.

**Table 2**

| Experiment No. | Substance Block Agent (g) | (A) | (B) (mm) | (C) (mm) | (D) |
|---|---|---|---|---|---|
| 1-9 | Conventional | X | 5.5 | 15.9 | Δ |
| 2-1 | 50 | Δ | 3.0 | 8.7 | ○ |
| 2-2 | 100 | ○ | 2.0 | 7.0 | ○ |
| 2-3 | 150 | ○ | 1.7 | 6.8 | ○ |
| 1-3 | 200 | ○ | 1.1 | 6.6 | ○ |
| 2-4 | 250 | ○ | 1.0 | 6.5 | ○ |
| 2-5 | 250 | ○ | 1.0 | 6.4 | ○ |
| 2-6 | 500 | ○ | 0.9 | 6.4 | ○ |

| | | | | | |
|---|---|---|---|---|---|
| No. 1-9 is for comparison, and Nos. 2-1 to 2-6 are for the invention. | | | | | |

From Table 2, it is found that the inventive treatment method prevents mortar from cracking, works much more for prevention of carbonation or penetration of chloride ions, and makes mortar less likely to turn white even wetted with water.

### Example 3

Prepared was a concrete sample consisting of cement in a unit amount of 315 kg/m³, water in a unit amount of 185 kg/m³, s/a (fine aggregate ratio of 38%), and air in an amount of 4.5±1.5%, and experimentation was carried out following Example 1 with the exception that the sample was coated with the substance block agent in Experiment No. 1-3 in Example 1. The results are set out in Table 3.

### Used Material

Coarse Aggregate: Commercial coarse aggregate, Gₘₐₓ 25 mm

**Table 3**

| Experiment No. | Coarse Aggregate | (A) | (B) (mm) | (C) (mm) |
|---|---|---|---|---|
| 1-3 | Not used | ○ | 1.1 | 6.6 |
| 3-1 | Used | ○ | 0.9 | 3.3 |

| | | | | |
|---|---|---|---|---|
| Experiment Nos. 1-3 and 3-1 are for the invention. | | | | |

From Table 3, it is found that the inventive treatment method prevents cracking of concrete, and works for prevention of carbonation and penetration of chloride ions.

### Example 4

The mortar sample of Example 1 was used. After placing, the pigment-containing substance block agent used in Experiment No. 1-3 in Example 1 was coated on the sample in an amount of 200 g per 1 m² at the timings shown in Table 4. However, wet curing was carried out in a period from the completion of setting (measured according to ASTM C403) to the coat of the substance block agent. After the coat of the substance block agent, wet curing was stopped. After a material age of 91 days, to what degree whitening occurred was observed as in Example 1. The results are set out in Table 4.

**Table 4**

| Experiment No. | Timing for the application of the substance block agent | (A) |
|---|---|---|
| 4-1 | Just after pouring | Δ |
| 4-2 | After the completion of setting (about 3 hours after pouring) | ○ |
| 4-3 | 3 hours after the completion of setting (about 6 hours after pouring) | ○ |
| 4-4 | 21 hours after the completion of setting (about 24 hours after pouring) | ○ |

From Table 4, it is found that the inventive treatment method works much more for prevention of cracking of mortar.

### INDUSTRIAL APPLICABILITY

The inventive substance block agent works effectively for prevention of cracking of mortar or concrete, and makes improvements in the ability to hold back carbonation and block off chloride ions. Further, because of being capable of preventing whitening when wetted with water, the inventive substance block agent is applicable to a wide range from civil engineering to construction.

## Claims

1. A cement composite, **characterized in that** a hardened cement product is coated with a substance block agent composed chiefly of an aqueous dispersion of synthetic resin, a swelling clay mineral and a pigment.

2. The cement composite according to claim 1, **characterized in that** said swelling clay mineral is a swelling clay mineral containing fluorine.

3. The cement composite according to claim 1, **characterized in that** said substance block agent contains a water-soluble resin.

4. The cement composite according to any one of claims 1, 2 and 3, **characterized in that** said substance block agent is coated on the hardened cement product in an amount of 50 to 500 g/m².

5. A method of forming the cement composite according to any one of claims 1, 2 and 3, **characterized in that** said substance block agent is coated on a surface of the hardened cement product.

6. A method of forming the cement composite according to claim 4, **characterized in that** said substance block agent is coated on a surface of the hardened cement product.
